# EUROPÄISCHE PATENTSCHRIFT

(11) **EP 2 680 381 B1**
(45) Veröffentlichungstag und Bekanntmachung des Hinweises auf die Patenterteilung: **12.08.2015**
(21) Anmeldenummer: 12174391.8
(22) Anmeldetag: 29.06.2012
(51) Int. Cl.: H02G 3/04, H01B 13/26

(54) **Verfahren zur Herstellung eines offenen oder geschlossenen und insbesondere mehrkammerigen Hohlprofils**
Method for producing an open or closed hollow profile, in particular one that has multiple chambers
Procédé de fabrication d'un profilé creux ouvert ou fermé, et plus particulièrement à plusieurs chambres

(43) Veröffentlichungstag der Anmeldung: 01.01.2014
(73) Patentinhaber: Voestalpine Krems Gmbh, 3500 Krems (AT)
(72) Erfinder: Pflügl, Hans, 3495 Rohrendorf (AT); Seyr, Alfred, 3125 Statzendorf (AT); Hauser, Christian, 1140 Wien (AT)
(74) Vertreter: Jell, Friedrich

(56) Entgegenhaltungen:
- WO-A2-2012/010907
- US-A- 3 430 337
- US-A- 3 745 230
- US-A1- 2009 294 149

## Beschreibung

Die Erfindung betrifft ein Verfahren zur Herstellung eines Strukturbauteils, insbesondere für ein Fahrzeug, bei dem ein Blech zu einem offenen oder geschlossenen und insbesondere mehrkammerigen Hohlprofil umgeformt und mit mindestens einem elektrischen Kabel versehen wird, das es wenigstens bereichsweise aufnimmt.

Um ein Hohlprofil mit einem Kabel zu versehen, ist es bekannt, dieses in den Hohlraum des fertig profilierten Hohlprofils einzuziehen. Nachteilig bedarf es für diese Vorgehensweise einer erhöhten Verfahrensdauer, sowie auch einen erheblichen Herstellungsaufwand.

Verschiedenste Umformverfahren zur Herstellung eines Hohlprofils aus einem Blech sind bekannt. Unter anderem auch ein Spaltprofilieren, bei dem Hohlprofile mit mehreren Kammern erzeugt werden. Meist ist auch mindestens eine dieser Kammern zur Aufnahme des Kabels vorgesehen.

WO 2012/010907 offenbart ein Verfahren nach dem Oberbegriff des Anspruchs 1.

Außerdem sind aus dem Stand der Technik Verfahren zur Herstellung von Kabeln mit einer Stahlhülle bekannt (DE3527714C2). Dabei werden zwei Bleche zu je einem U-Profil rollprofiliert, ein Kabel zwischen den beiden fertigen U-Profilen eingelegt und anschließend die beiden U-Profile zu einer Stahlhülle zusammengeschweißt. Zwar kann durch das Einlegen des Kabels vor dem Verschweißen der U-Profile das Versehen des Blechs mit einem Kabel erleichtert werden, durch einen parallelen Umformschritt von zwei Blechen sowie deren anschließenden Verschweißung wird das Verfahren jedoch verhältnismäßig aufwändig - insbesondere in Hinblick auf die aufeinander abzustimmenden Stoßkanten der Rollprofile, um ein anschließendes Verschweißen zu ermöglichen. Daher sind auch hier eine erhöhte Verfahrensdauer, sowie ein hoher Herstellungsaufwand zu erwarten.

Es ist daher die Aufgabe der Erfindung, ausgehend vom eingangs geschilderten Stand der Technik, ein Verfahren zur Herstellung eines Hohlprofils mit einem in seinem Hohlraum vorgesehenen elektrischen Kabel zu vereinfachen.

Die Erfindung löst die gestellte Aufgabe dadurch, dass das Blech bei seinem Umformen oder zwischen zwei seiner Umformungsschritte mit dem Kabel versehen und mit diesem Kabel zumindest bereichsweise kraft- oder stoffschlüssig verbunden wird, wobei das Blech mit einem Kabel versehen wird, das gegenüber der Länge des Blechs eine erhöhte Kabellänge aufweist.

Wird das Blech bei seinem Umformen oder zwischen zwei seiner Umformungsschritte mit dem Kabel versehen und mit diesem Kabel zumindest bereichsweise kraft- oder stoffschlüssig verbunden, kann sich auf vorteilhafte Weise ein nachtägliches und meist aufwändiges Einziehen eines Kabels in das Hohlprofil erübrigen. Das höchstens teilweise umgeformte Blech kann nämlich mit seinem anhaftenden Kabel gemeinsam und somit auch verfahrenssicher zu seiner Endform weiter umgeformt werden, wodurch selbst bei komplexer Formgebung einfache Verfahrensverhältnisse hinsichtlich der Handhabung eines Kabels gewährleistet bleiben können. Hinzu kommt, dass mit der weiteren Formgebung des Blechs auch keine Abstimmung gegenüber anderen Profilteilen erfolgen muss, um damit einen Hohlraum zur Führung des Kabels zu erzeugen, womit das Verfahren auch äußerst reproduzierbar komplexe geschlossene oder offene Hohlprofile schaffen kann. Das erfindungsgemäß am umzuformenden bzw. weiter umzuformenden Blech befestigte Kabel kann daher zu einer erheblichen Handhabungsvereinfachung im Verfahren beitragen. Auf diese Weise kann erreicht werden, ein offenes oder geschlossenes Hohlprofil mit einem elektrischen Kabel in seinem Hohlraum effizient und kostengünstig herzustellen. Eventuelle - etwa bei seinem Verlegen - auftretende Zugbelastungen auf das Kabel können vermieden werden, indem das Blech mit einem Kabel versehen wird, das gegenüber der Länge des Blechs eine erhöhte Kabellänge aufweist. Dadurch kann sich auch ein Ablängen des Hohlprofils vereinfachen. Die zusätzliche Kabellänge im Hohlprofil kann die Möglichkeit eines Ablängens an jeglicher Stelle des Hohlprofils eröffnen - und ein einfaches Anschließen des aufgenommenen Kabels zulassen.

Im Allgemeinen wird erwähnt, dass die kraft- oder stoffschlüssige Verbindung im Wesentlichen verhindern soll, dass das Kabel bei einer Handhabung des Hohlprofils aus dem Hohlprofil selbstständig herausfällt bzw. -rutscht. Beispielsweise ist vorstellbar, diesen Effekt der kraftschlüssigen Verbindung dadurch zu erreichen, dass das Kabel von dem vorprofilierten Blech eng geführt wird, um so eine ausreichende Haftreibung zwischen Kabel oder Kabeln und Blech sicherzustellen. Außerdem wird festgehalten, dass ein elektrisches Kabel mindestens einen elektrischen Leiter aufweist, der mit einer elektrisch isolierenden Umhüllung umgeben sein kann. Außerdem werden elektrisches Kabel und elektrische Leitung synonym verwendet.

Im Allgemeinen wird erwähnt, dass sich das erfindungsgemäße Verfahren besonders bei einer Herstellung eines Hohlprofils auszeichnen kann, das als Strukturbauteil, beispielsweise für ein Fahrzeug, verwendet wird.

Eine ausreichend feste Verbindung zwischen Blech und Kabel kann auf kostengünstige Weise hergestellt werden, wenn wenigstens eine Klammer am Blech befestigt wird, die das Kabel mit dem Blech kraftschlüssig verbindet.

Alternativ oder auch zusätzlich zur Klammer kann zwischen Kabel und Blech mindestens bereichsweise eine Klebeschicht vorgesehen sein. Solch eine Klebeschicht kann außerdem den Vorteil bieten, dass komplexe Umformverfahren am Blech vorgenommen werden können, ohne dabei ein Lösen des Kabels vom Blech befürchten zu müssen. Dadurch kann die Gefahr von Beschädigungen am Kabel praktisch ausgeschlossen werden, was wiederum für eine erhöhte Reproduzierbarkeit des Verfahrens sorgen kann.

Ein einfach durchzuführendes und zu steuerndes Verfahren kann sich ergeben, wenn das Blech zu einem Hohlprofil profiliert wird. Dies kann durch Spalt- und/oder Roll- bzw. Walzprofilieren erfolgen. Insbesondere kann sich Rollprofilieren auszeichnen, um für ein kostengünstig herstellbares Hohlprofil mit einem aufgenommenen Kabel zusorgen.

Eine vereinfachte Handhabung im Zuge des Versehen des Blechs mit einem Kabel kann sich ergeben, wenn in einem Umformschritt mindestens eine entlang der Längsseite des Blechs verlaufende Führungsaufnahme erzeugt wird, die mit dem Kabel versehen wird. Die Führungsaufnahme kann nämlich sowohl als Einlegehilfe, als auch zur exakten Ausrichtung des Kabels genutzt werden. Insbesondere können durch diese exakte Positionierung des Kabels am Blech Beschädigung im Zuge des Umformens, die insbesondere im Zuge der Herstellung komplexer Hohlprofile bzw. Hohlprofilformen auftreten können, vermieden werden. Ein sicheres und reproduzierbares Verfahren kann so ermöglicht werden.

Vorteilhaft kann das Umformen des Blechs gleichzeitig auch dazu genutzt werden, das Kabel am Blech kraftschlüssig zu verbinden. Hierfür ist das Blech gegenüber dem Kabel lediglich entsprechend umzuformen, beispielsweise indem das Blech am Kabel eng anliegt und damit einen erhöhten Reibschluss ausbildet, womit das Kabel im Hohlprofil gegenüber einem unerwünschten Ausziehen standfest gehalten wird.

Diese kraftschlüssige Verbindung zwischen Kabel und Blech kann ermöglicht werden, indem eine das Kabel kraftschlüssig haltende Hinterschneidung in das Blech profiliert wird. Solch eine Hinterschneidung kann beispielsweise durch ein Umbiegen eines Stegs am Blech hergestellt werden. Ein einfaches Verfahren kann sich so ergeben.

Alternativ dazu bzw. auch zusätzlich dazu kann die kraftschlüssige Verbindung ausgebildet bzw. in ihrer Standfestigkeit verbessert werden, wenn das Blech mit dem Kabel punktuell verquetscht wird.

Wird ein Schlitten entlang des Blechs geführt wird, mit dem das Blech zum kraftschlüssigen Verbinden mit dem Kabel umgeformt wird, kann der Verfahrensablauf beschleunigt und in seiner Genauigkeit verbessert werden.

Das Verfahren kann weiter vereinfacht werden, indem der Schlitten das Kabel zum Blech führt und dieses damit versieht.

Wird das Kabel wenigstens bereichsweise schlingenförmig verlegt, kann für eine ausreichende Reservelänge des im Hohlprofil verlegten Kabels gesorgt werden. Insbesondere kann sich eine Schlinge als vorteilhaft im Bereich der Ablängung des Hohlprofils und/oder elektrischen Abzweigung am Hohlprofil auszeichnen, etwa um das Kabel dem Hohlprofil entnehmen zu können.

Ein Ausziehen des Kabels kann erleichtert werden, indem beim schlingenförmigen Verlegen des Kabels die kraft- oder stoffschlüssige Verbindung des Kabels mit dem Blech in diesem Bereich zur Erzeugung einer Sollbruchstelle geschwächt wird. Damit können bereits leichte Zugkräfte auf das Kabel ausreichen, dieses dem Hohlprofil zu dessen elektrischen Anschluss zu entnehmen. Die Handhabungfreundlichkeit eines Hohlprofils kann dadurch erheblich erhöht werden.

Ein geschlossenes Hohlprofil kann auf einfache Weise erzeugt werden, wenn das Hohlprofil an seinen längsseitigen Profilenden stoffschlüssig verbunden wird. Unterschiedliche Schweißverfahren sind hierfür vorstellbar.

In den Zeichnungen ist der Erfindungsgegenstand beispielsweise anhand mehrerer Ausführungsbeispiele dargestellt. Es zeigen
- Fig. 1: zwei Verfahrensschritte zum Herstellen eines Hohlprofils mit einem Kabel in seinem Hohlraum,
- Fig. 2: eine Detailansicht zum Verfahrensschritt nach Fig. 1, bei dem das Blech mit einem Kabel bei gleichzeitiger Umformung des Blechs zum Hohlprofil versehen wird,
- Fig. 3: eine Detailansicht zum Verfahrensschritt, bei dem das Blech in einer alternativen Ausführungsform mit dem Kabel verquetscht wird,
- Fig. 4: eine dritte Ausführung des Verfahrens,
- Fig. 5: eine vierte Ausführung des Verfahrens, bei der das Kabel über Klammern mit dem Blech kraftschlüssig verbunden ist,
- Fig. 6: eine fünfte Ausführung des Verfahrens mit einer stoffschlüssigen Verbindung zwischen Blech und Kabel,
- Fig. 7: eine Darstellung zu einer schlingenförmigen Verlegung des Kabels,
- Fig. 8: eine sechste Ausführung des Verfahrens mit einer kraftschlüssigen Verbindung zwischen Blech und Kabel.

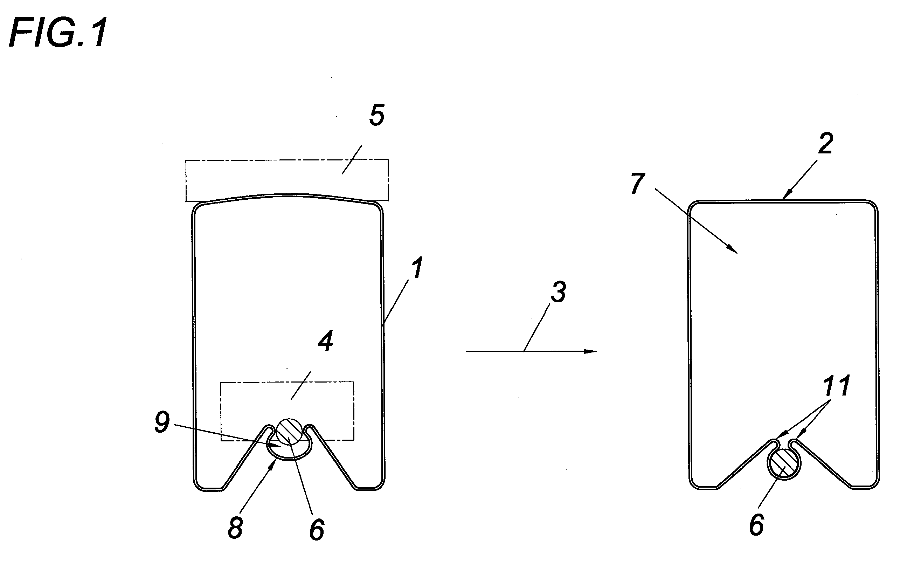

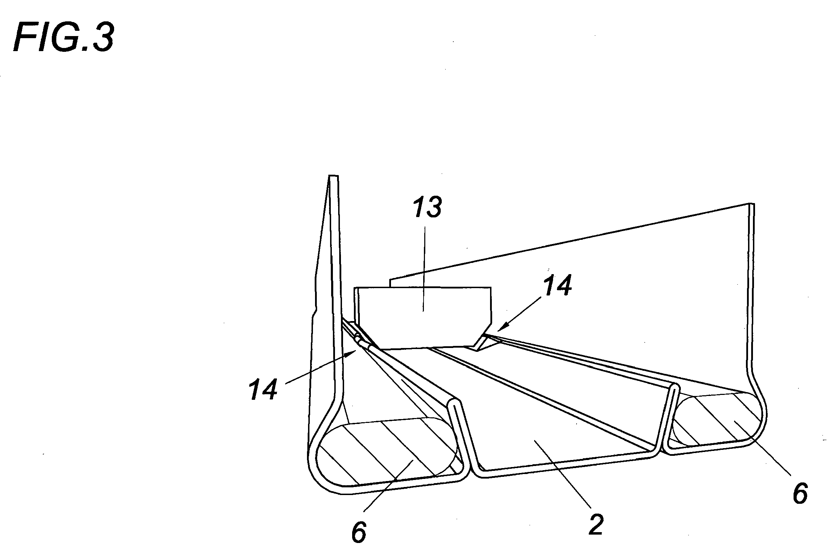

Nach Fig. 1 ist ein bereits teilweise umgeformtes Blech 1 in Stirnansicht dargestellt, das zu einem Hohlprofil 2 mit Hilfe einer Rollprofilierung 3 endumgeformt wird. Für dieses kontinuierliche Biegeverfahren belasten Walzen 4, 5 das teilumgeformte Blech 1, um dieses auf den gewünschten Endquerschnitt, gemäß Hohlprofil 2, zu bringen. Das Hohlprofil 2 weist zudem ein Kabel 6 auf, das im Hohlraum 7 des Hohlprofils verläuft bzw. vom Hohlprofil 2 aufgenommen wird. Um nun ein nachträgliches Einziehen in das fertige Hohlprofil 2 eines Kabels 6 zu vermeiden, wird das Blech 1 bereits vor seinem Endumformen - also zwischen zwei Umformschritten, dem Teilumformen und Endumformen-, mit dem Kabel 6 versehen, wie dies in Fig. 1 erkannt werden kann. Am Blech 1 wurde bereits in einem Umformschritt zuvor eine entlang seiner Längsseite verlaufende Führungsaufnahme 8 eingeformt, um dem Kabel 6 eine Kammer 9 im Hohlraum 7 des Endprofils 2 zur Verfügung zu stellen. Diese Kammer 9 kann insbesondere auch bei der weiteren Verwendung des Holprofils 2 von Vorteil sein, um dadurch das Kabel 6 zu schützen. Das noch nicht endumgeformte Blech 1 kann nun mit dem Kabel 6 vergleichsweise einfach versehen werden, weil seine Endabmessungen gemäß dem zu erzeugenden Hohlprofil 2 noch nicht erreicht sind. Besonders aber zeichnet sich die Erfindung dadurch aus, dass das Kabel 6 beim weiteren Umformen 3 bzw. hier beim Endumformen des Blechs 1 mit dem Blech 1 zumindest bereichsweise kraftschlüssig verbunden wird, was insbesondere der Fig. 3 entnommen werden kann.

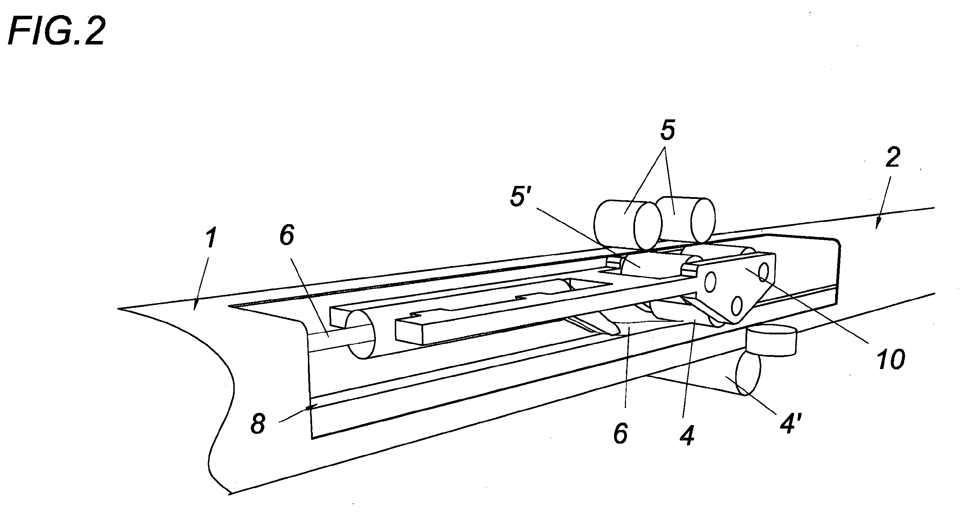

In Fig. 2 ist ein durch das teilumgeformte Blech 1 gezogener Schlitten 10 dargestellt, der entlang des Blechs 1 geführt, das Kabel 6 in die Führungsaufnahme 8 einlegt und die Führungsaufnahme 8 durch ihr zugeordnete Walzen 4 und 4' weiter walzprofiliert. Dieses Umformen schließt die Führungsaufnahme 8 und erzeugt damit eine das Kabel 6 kraftschlüssig haltende Hinterschneidung 11, welche Hinterschneidung 11 beispielsweise der rechten Zeichnung der Figur 1 zu entnehmen ist. Zusätzlich gibt dieses Umformen auch dem Außen- und Innenbereich des Blechs die gewünschte Endform, wie im Vergleich zwischen Blech 1 und geschlossenem Hohlprofil 2 nach Fig. 1 zu erkennen ist. Hierfür sind dem Schlitten 10 mehrere weitere Walzen 5, 5' zugeordnet.

Zusätzlich oder auch alternativ zum nach Fig. 2 dargestellten Schlitten 10 wird nach Fig. 3 gezeigt, dass das Blech auch mit einem Quetschwerkzeug 13 umgeformt werden kann. Mit Hilfe dieses Quetschwerkzeugs 13 wird nämlich das Blech 1 mit dem Kabel 6 verquetscht, wie dies an den Quetschpunkten 14 zu sehen ist. Diese Quetschpunkte 14 reichen aus, um für eine kraftschlüssige Verbindung zwischen Blech 1 und Kabel 6 zu sorgen.

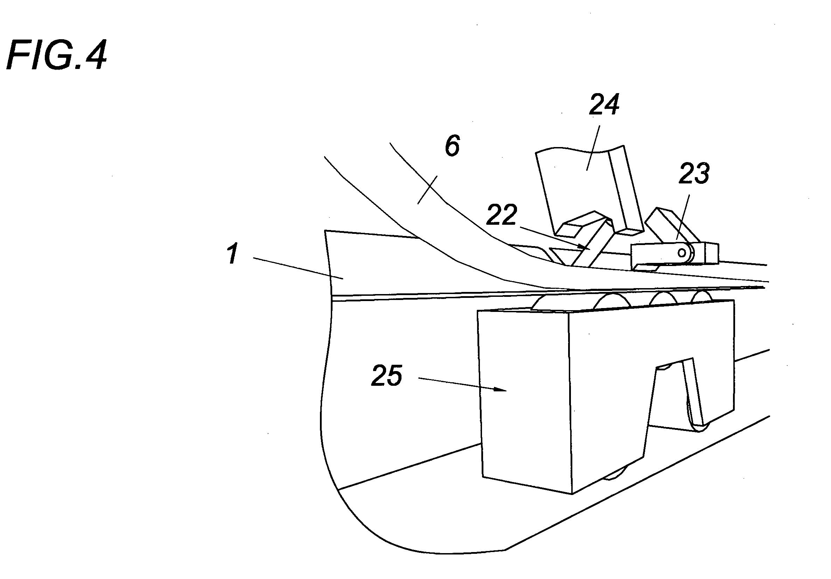

Nach Fig. 4 wird ein kraftschlüssiger Verbund gezeigt, bei dem aus dem Blech 1 ein Streifen 22 mit Hilfe eines Schneidwerkzeugs 23 ausgestanzt wird. Dieser Streifen 22 wird mit Hilfe eines dem Schneidwerkzeug 23 nachgeordneten Umformwerkzeugs 24 in Zusammenspiel mit einem Schlitten 25 über das Kabel 6 gebogen.

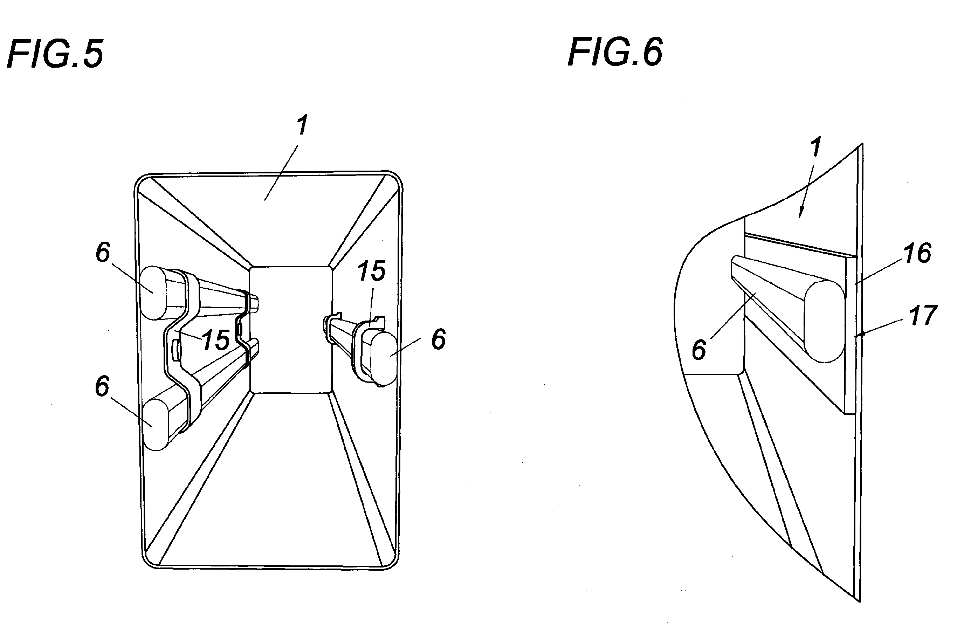

Nach Fig. 5 wird eine kraftschlüssige Befestigung des Kabels 6 am Blech 1 über Klammern dargestellt. Die Klammern 15 sind an das Blech 1 genietet, gesteckt oder anderwärtig mit dem Blech 1 verbunden.

Ebenso denkbar ist eine stoffschlüssige Verbindung zwischen Blech 1 und Kabel 6 zur Fixierung des Kabels am Blech 1, was nach Fig. 6 näher dargestellt wird. Auf das Blech 1 ist ein doppelseitig klebender Klebestreifen 16 aufgebracht, der eine Klebeschicht 17 ausbildet und so das Kabel 6 am Blech 1 befestigt.

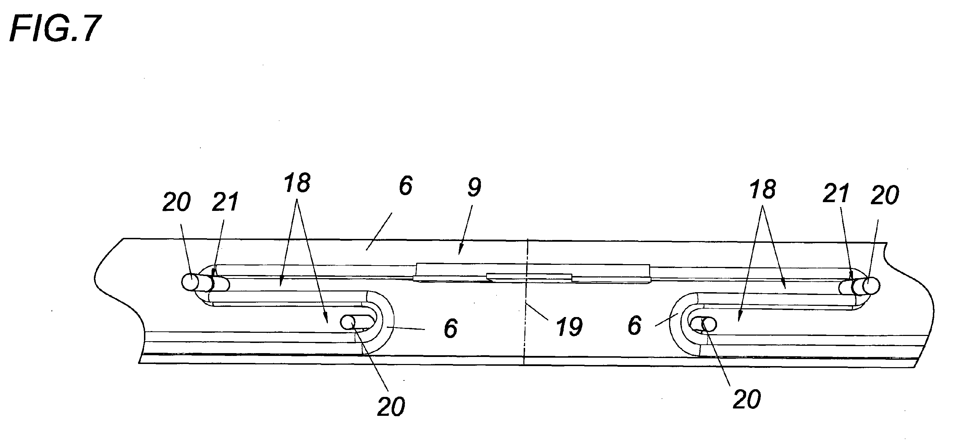

Nach Fig. 7 ist dargestellt, wie das Blech 1 mit einem Kabel 6 versehen werden kann, das eine gegenüber der Länge des Blechs 1 erhöhten Kabellänge aufweist.

Hierfür wird das Kabel 6 schlingenförmig verlegt, so dass sich Kabelschlingen 18 im Hohlraum 7 des Hohlprofils 2 ausbilden. Gerade im Bereich einer Kante der Ablängung 19 sorgt dies dafür, dass das mit dem Blech 1 kraft- und/oder stoffschlüssig verbundene Kabel 6 ausreichend aus dem Hohlprofil 2 gezogen werden kann, um dieses elektrisch anzuschließen.

Die Kabelschlingen 18 werden über Stifte 20 im Hohlprofil 2 gehalten, wobei die äußeren Stifte 20 eine Sollbruchstelle 21 aufweisen. Dadurch kann eine Schwächung der kraft- oder stoffschlüssigen Verbindung des Kabels 6 mit dem Blech 1 sichergestellt werden, um ein Ausziehen des Kabels 6 zu erleichtern.

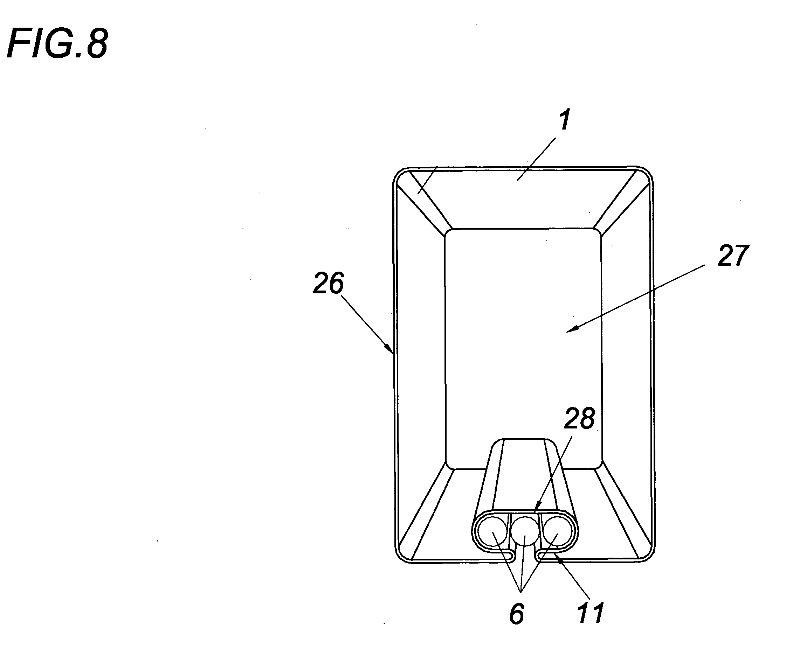

In Fig. 8 wird ein offenes Hohlprofil 26 mit mehreren Kammern 27, 28 dargestellt. Dieses Hohlprofil 26 nimmt drei Kabel 6 in seiner Kammer 28 auf. Zum kraftschlüssigen Verbinden der Kabel 6 mit dem Blech 1 ist in das Blech 1 eine Hinterschneidung 11 eingeformt.

## Patentansprüche

1. Verfahren zur Herstellung eines Strukturbauteils, insbesondere für ein Fahrzeug, bei dem ein Blech (1) zu einem offenen oder geschlossenen und insbesondere mehrkammerigen Hohlprofil (2) umgeformt und mit mindestens einem elektrischen Kabel (6) versehen wird, das es wenigstens bereichsweise aufnimmt, **dadurch gekennzeichnet, dass** das Blech (1) bei seinem Umformen oder zwischen zwei seiner Umformungsschritte mit dem Kabel (6) versehen und mit diesem Kabel (6) zumindest bereichsweise kraft- oder stoffschlüssig verbunden wird, wobei das Blech (1) mit einem Kabel (6) versehen wird, das gegenüber der Länge des Blechs (1) eine erhöhte Kabellänge aufweist.

2. Verfahren nach Anspruch 1, **dadurch gekennzeichnet, dass** wenigstens eine Klammer (15) am Blech (1) befestigt wird, die das Kabel (6) mit dem Blech (1) kraftschlüssig verbindet.

3. Verfahren nach Anspruch 1 oder 2, **dadurch gekennzeichnet, dass** zwischen Kabel (6) und Blech (1) mindestens bereichsweise eine Klebeschicht (17) vorgesehen ist.

4. Verfahren nach Anspruch 1, 2 oder 3, **dadurch gekennzeichnet, dass** das Blech (1) zu einem Hohlprofil (2) profiliert, insbesondere spalt- und/oder roll- bzw. walzprofiliert, wird.

5. Verfahren nach einem der Ansprüche 1 bis 4, **dadurch gekennzeichnet, dass** in einem Umformschritt mindestens eine entlang der Längsseite des Blechs (1) verlaufende Führungsaufnahme (8) erzeugt wird, die mit dem Kabel (6) versehen wird.

6. Verfahren nach einem der Ansprüche 1 bis 5, **dadurch gekennzeichnet, dass** das Blech (1) gegenüber dem Kabel (6) derart umgeformt wird, dass sich zwischen Kabel (6) und Blech (1) eine kraftschlüssige Verbindung ausbildet.

7. Verfahren nach Anspruch 6, **dadurch gekennzeichnet, dass** eine das Kabel (6) kraftschlüssig haltende Hinterschneidung (11) in das Blech (1) profiliert wird.

8. Verfahren nach Anspruch 6 oder 7, **dadurch gekennzeichnet, dass** das Blech (1) mit dem Kabel (6) punktuell verquetscht wird.

9. Verfahren nach Anspruch 6, 7 oder 8, **dadurch gekennzeichnet, dass** ein Schlitten entlang des Blechs (1) geführt wird, mit dem das Blech (1) zum kraftschlüssigen Verbinden mit dem Kabel (6) umgeformt wird.

10. Verfahren nach einem der Ansprüche 1 bis 9, **dadurch gekennzeichnet, dass** der Schlitten das Kabel (6) zum Blech (1) führt und dieses damit versieht.

11. Verfahren nach Anspruch 10, **dadurch gekennzeichnet, dass** das Kabel (6) wenigstens bereichsweise schlingenförmig, insbesondere im Bereich einer Ablängung (19) des Hohlprofils (2) und/oder elektrischen Abzweigung am Hohlprofil (2), verlegt wird.

12. Verfahren nach Anspruch 11, **dadurch gekennzeichnet, dass** beim schlingenförmigen Verlegen des Kabels (6) die kraft- oder stoffschlüssige Verbindung des Kabels (6) mit dem Blech (1) in diesem Bereich zur Erzeugung einer Sollbruchstelle (21) geschwächt wird.

13. Verfahren nach Anspruch 11 oder 12, **dadurch gekennzeichnet, dass** beim schlingenförmigen Verlegen des Kabels (6) diese Kabelbereiche wenigstens teilweise lösbar gegeneinander fixiert werden.

14. Verfahren nach einem der Ansprüche 1 bis 13, **dadurch gekennzeichnet, dass** das Hohlprofil (2) an seinen längsseitigen Profilenden stoffschlüssig verbunden wird, um ein geschlossenes Hohlprofil (2) zu erzeugen.

## Claims

1. A method for producing a structural component, especially for a vehicle,
wherein a metal sheet (1) is formed into an open or closed and especially multichamber hollow profile (2), and is provided with at least one electric cable (6) which it accommodates at least in sections, **characterized in that** the sheet (1) is provided with the cable (6) during forming or between two of its forming steps, and is connected to said cable (6) at least in sections in a friction-locked or materially bonded manner, wherein the sheet (1) is provided with a cable (6) which has an increased cable length in comparison with the length of the sheet (1).

2. A method according to claim 1, **characterized in that** at least one clamp (15) is fixed to the sheet (1), which clamp connects the cable (6) to the sheet (1) in a friction-locked manner.

3. A method according to claim 1 or 2, **characterized in that** at least one adhesive layer (17) is provided at least in sections between the cable (6) and the sheet (1).

4. A method according to claim 1, 2 or 3, **characterized in that** the sheet (1) is profiled into a hollow profile (2), especially flow-split and/or roll-profiled or roll-formed.

5. A method according to one of the claims 1 to 4, **characterized in that** at least one guide receptacle (8) extending along the longitudinal side of the sheet (1) is produced in a forming step, which guide receptacle is provided with the cable (6).

6. A method according to one of the claims 1 to 5, **characterized in that** the sheet (1) is formed in relation to the cable (6) in such a way that a friction-locked connection is formed between the cable (6) and the sheet (1).

7. A method according to claim 6, **characterized in that** an undercut (11) which holds the cable (6) in a friction-locked manner is profiled into the sheet (1).

8. A method according to claim 6 or 7, **characterized in that** the sheet (1) is selectively crimped with the cable (6).

9. A method according to claim 6, 7 or 8, **characterized in that** a carriage is guided along the sheet (1), with which the sheet (1) is formed for the friction-locked connection with the cable (6).

10. A method according to one of the claims 1 to 9, **characterized in that** the carriage guides the cable (6) to the sheet (1) and provides said sheet therewith.

11. A method according to claim 10, **characterized in that** the cable (6) is laid in a looped manner at least in sections, especially in the region of a cut to length (19) of the hollow profile (2) and/or an electric branching on the hollow profile (2).

12. A method according to claim 11, **characterized in that** during the looped laying of the cable (6) the friction-locked or materially bonded connection of the cable (6) with the sheet (1) is weakened in this region for producing a predetermined breaking point (21).

13. A method according to claim 11 or 12, **characterized in that** during the looped laying of the cable (6) said cable regions are detachably fixed against each other at least in sections.

14. A method according to one of the claims 1 to 13, **characterized in that** the hollow profile (2) is connected in a materially bonded manner on its profile ends on the longitudinal side in order to produce an enclosed hollow profile (2).

## Revendications

1. Procédé pour la fabrication d'un composant structurel, en particulier pour un véhicule, dans lequel une tôle (1) est mise en forme pour obtenir un profilé creux (2) ouvert ou fermé et en particulier à plusieurs chambres et est dotée d'au moins un câble électrique (6) qu'elle renferme au moins par endroits, **caractérisé en ce que** la tôle (1) est équipée du câble (6) lors de sa mise en forme ou entre deux étapes de sa mise en forme et est reliée au moins par endroits avec ce câble (6) par friction ou solidarité de matière, la tôle (1) étant équipée d'un câble (6) qui présente une longueur de câble supérieure à la longueur de la tôle (1).

2. Procédé selon la revendication 1, **caractérisé en ce qu'**au moins une pince (15) est fixée à la tôle (1) et relie le câble (6) à la tôle (1) par friction.

3. Procédé selon la revendication 1 ou 2, **caractérisé en ce qu'**il est prévu au moins par endroits entre le câble (6) et la tôle (1) une couche d'adhésif (17).

4. Procédé selon la revendication 1, 2 ou 3, **caractérisé en ce que** la tôle (1) est profilée pour donner un profilé creux (2), en particulier par laminage en bande partagée ou par profilage au rouleau ou au laminoir.

5. Procédé selon l'une des revendications 1 à 4, **caractérisé en ce qu'**une étape de mise en forme produit au moins un logement de guidage (8) courant le long du côté longitudinal de la tôle (1) et qui est équipé du câble (6).

6. Procédé selon l'une des revendications 1 à 5, **caractérisé en ce que** la tôle (1) est mise en forme par rapport au câble (6) de telle manière qu'il se crée une liaison par friction entre le câble (6) et la tôle (1).

7. Procédé selon la revendication 6, **caractérisé en ce qu'**une contre-dépouille (11) retenant le câble (6) par friction est profilée dans la tôle (1).

8. Procédé selon la revendication 6 ou 7, **caractérisé en ce que** la tôle (1) est écrasée par points avec le câble (6).

9. Procédé selon la revendication 6, 7 ou 8, **caractérisé en ce qu'**un chariot est guidé le long de la tôle (1) pour mettre en forme la tôle (1) en vue de l'assemblage par friction avec le câble (6).

10. Procédé selon l'une des revendications 1 à 9, **caractérisé en ce que** le chariot guide le câble (6) vers la tôle (1) et équipe celle-ci de celui-là.

11. Procédé selon la revendication 10, **caractérisé en ce que** le câble (6) est posé au moins par endroits en forme de boucle, en particulier au niveau d'une réduction de longueur (19) du profilé creux (2) et/ou d'une ramification électrique sur le profilé creux (2).

12. Procédé selon la revendication 11, **caractérisé en ce que** lors de la pose du câble (6) en forme de boucle, l'assemblage par adhérence ou solidarité de matière du câble (6) avec la tôle (1) est affaibli dans cette zone afin d'obtenir une zone de rupture volontaire (21).

13. Procédé selon la revendication 11 ou 12, **caractérisé en ce que** lors de la pose du câble (6) en forme de boucle, ces zones du câble sont fixées au moins par endroits les unes par rapport aux autres d'une manière pouvant être défaite.

14. Procédé selon l'une des revendications 1 à 13, **caractérisé en ce que** le profilé creux (2) est assemblé à ses extrémités de profilé longitudinales par solidarité de matière afin de produire un profilé creux (2) fermé.
